# EUROPÄISCHE PATENTSCHRIFT

(11) **EP 3 091 649 B1**
(45) Veröffentlichungstag und Bekanntmachung des Hinweises auf die Patenterteilung: **28.02.2018**
(21) Anmeldenummer: 16168186.1
(22) Anmeldetag: 03.05.2016
(51) Int. Cl.: H02M 1/12

(54) **WECHSELRICHTER**
INVERTER
ONDULEUR

(30) Priorität: 08.05.2015 DE 102015005992
(43) Veröffentlichungstag der Anmeldung: 09.11.2016
(73) Patentinhaber: Kostal Industrie Elektrik GmbH, 58513 Lüdenscheid (DE)
(72) Erfinder: Silkenbeumer, Tobias, 58099 Hagen (DE); Peters, Stephan, 44137 Dortmund (DE)
(74) Vertreter: Kerkmann, Detlef

(56) Entgegenhaltungen:
- EP-A2- 2 395 651
- US-A1- 2015 009 727
- US-A1- 2016 094 149

## Beschreibung

Die Erfindung betrifft einen Wechselrichter mit einer Wechselrichterbrücke, die eine ein- oder mehrphasige Wechselspannung erzeugt, welche über einen oder mehrere Phasenleiter und einen Neutralleiter mit einem Wechselspannungsnetz verbindbar ist, und mit einem der Wechselrichterbrücke nachgeschalteten T-Filter, bestehend für jeden Phasenleiter aus jeweils zwei hintereinandergeschalteten Längsdrosseln, an deren Verbindungspunkt jeweils ein Anschluss eines Kondensators anliegt, dessen zweiter Anschluss gegen den Neutralleiter geschaltet ist.

Elektrische Anlagen zur Umwandlung regenerativer Energien, wie zum Beispiel Windkraft- oder Photovoltaikanlagen weisen zumeist eine Anordnung mit einem Wechselrichter auf, welcher eine Spannung in der Höhe und Frequenz der üblichen Netzwechselspannung ausgibt. Dabei ist es zumeist vorgesehen, dass die elektrische Ausgangsleistung des Wechselrichters außer in ein lokales Verbrauchernetz auch ganz oder teilweise in ein öffentliches Spannungsversorgungsnetz eingespeist werden kann.

Bei der Einspeisung von elektrischer Leistung, insbesondere solcher von regenerativen Energieerzeugungsanlagen mit Photovoltaik- oder Windkraftgeneratoren, in ein Wechselspannungsnetz, sind normative Rahmenbedingungen zu beachten. Bis vor kurzem mussten netzgekoppelte Energieerzeugungsanlagen den von ihnen erzeugten Wechselstrom ohne Phasenverschiebung (cos ϕ etwa gleich eins) zur Netzspannung einspeisen. Neuere Normen sehen jedoch vor, dass sich gerade auch dezentrale Energieerzeugungsanlagen an einem Netzmanagement beteiligen und dazu insbesondere auf einer Niederspannungsebene sowohl kapazitive als auch induktive Blindleistung bereitstellen müssen.

Zur Bereitstellung von Blindleistung und zu deren Regelung muss ein Wechselrichter in der Lage sein, im Laufe einer Periode der sinusförmigen Netzspannung sowohl zeitweise elektrische Leistung in das Wechselspannungsnetz einzuspeisen als auch zeitweise elektrische Leistung aus dem Wechselspannungsnetz zu beziehen. Insbesondere auf das Beziehen elektrischer Leistung aus dem Wechselspannungsnetz sind jedoch viele bekannte Wechselrichter-Topologien nicht eingerichtet, so dass besonderer Aufwand betrieben wird, solche Topologien blindleistungsfähig zu machen. Hierdurch steigen sowohl Komplexität als auch Herstellkosten signifikant an und es entstehen zudem Wirkungsgradverluste.

Aus der DE 10 2009 029 387 A1 ist eine Wechselrichteranordnung mit einer Halbleiter-Brückenschaltung bekannt, wobei ein Gleichstromsteller (DC-DC-Wandler) zur Erzeugung von Halbwellen einer ausgangsseitigen Wechselspannung vorgesehen ist und die Brückenschaltung dem Gleichstromsteller nachgeschaltet ist und als Polwender für die Halbwellen wirkt. In dieser Anordnung ist der Gleichstromsteller als Vierquadrantensteller ausgebildet, somit rückspeisefähig und die Wechselrichteranordnung hierdurch blindleistungsfähig.

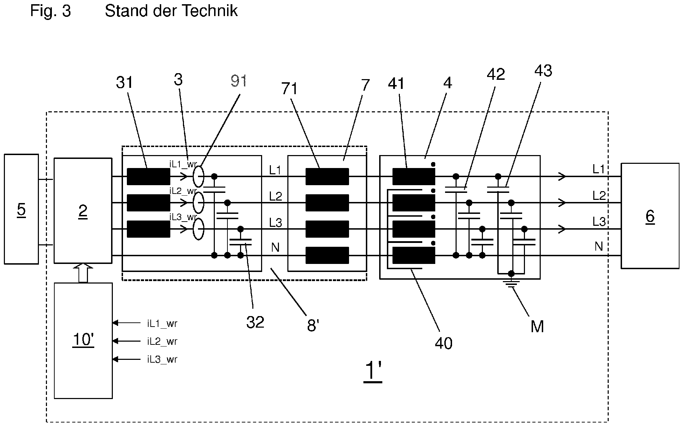

Um die unterschiedlichen Netzanschlussrichtlinien für Photovoltaikwechselrichter erfüllen zu können, muss der Phasenwinkel zwischen Ausgangsstrom und Netzspannung einstellbar sein. Um dieses zu ermöglichen, muss der zeitliche Abstand der Nulldurchgänge von Strom und Spannung zueinander messbar sein. Ein bekannter Wechselrichter, dessen Aufbau vereinfacht in der Figur 3 skizziert ist, steuert den Phasenwinkel zwischen Strom und Spannung anhand des Ausgangsstroms der Wechselrichterbrücke. Eine Regelung ist dabei nicht möglich, da die Phasenlage der Ausgangsspannung am Netzausgang nicht ermittelt, sondern nur grob über die relativ ungenau bekannten Schaltungsimpedanzen abgeschätzt wird. Mit dieser Anlage kann der Phasenwinkel nicht mit der durch neuere Normen geforderten Genauigkeit eingestellt werden.

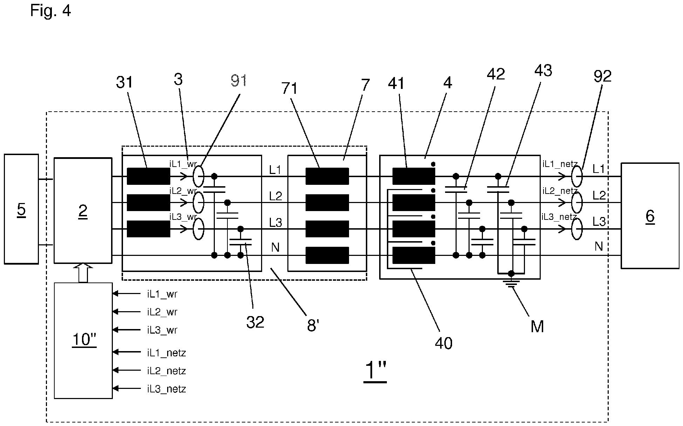

Um eine Regelung des Phasenwinkels zu realisieren, können, wie in der Figur 4 dargestellt, zusätzliche Stromsensoren in die Phasenleiter der Netzausgangsleitungen eingesetzt werden. Diese Lösung erreicht eine hohe Genauigkeit, ist dabei aber recht kostenaufwendig, da geeignete Stromsensoren relativ teuer sind.

Der Erfindung liegt die Aufgabe zugrunde, einen blindleistungsfähigen Wechselrichter zur Umwandlung einer Gleichspannung in eine Wechselspannung und zur Einspeisung eines Wechselstroms in ein Wechselspannungsnetz zu schaffen, der mit geringem Schaltungs- und Kostenaufwand eine vorgebbaren Blindleistungsanteil mit hoher Genauigkeit bereitstellen kann.

Diese Aufgabe wird erfindungsgemäß dadurch gelöst, dass die netzseitigen Längsdrosseln des T-Filters jeweils eine Zusatzwicklung aufweisen, an denen jeweils eine Signalspannung zur Beeinflussung der Wechselrichterbrücke abnehmbar ist.

Die netzseitigen Längsdrosseln bilden mit den Zusatzwicklungen in jedem Phasenleiter jeweils einen Übertrager aus, an denen jeweils eine Signalspannung abnehmbar ist, die dem Strom auf dem zugehörigen Phasenleiter jeweils proportional ist. Die zeitabhängigen Verläufe der Signalspannungen können durch eine Ansteuerschaltung erfasst und mit den Verläufen der von den Stromsensoren erfassten Strömen auf den Phasenleitern verglichen werden, wodurch für jeden Phasenleiter der jeweils real vorliegende Phasenwinkel bestimmt wird. Dies ermöglicht es der Ansteuerschaltung, durch eine entsprechende Ansteuerung der Wechselrichterbrücke den Phasenwinkel jedes Phasenleiters sehr genau auf einen vorgebbaren oder festgelegten Wert einzuregeln. Damit kann der Ausgangsleistung des Wechselrichters insgesamt ein induktiver oder kapazitiver Blindleistungsanteil mit hoher Genauigkeit vorgegeben werden.

Vorteilhaft hierbei ist, dass die Zusatzwicklungen jeweils nur wenige Drahtwindungen aufzuweisen brauchen, und damit, besonders im Vergleich zu zusätzlichen Stromsensoren, sehr einfach und kostengünstig zur realisieren sind. Dabei kann die Längsdrossel mit der Zusatzwicklung selbstverständlich auch von vornherein als ein Übertrager konzipiert sein, dessen Primärseite mit einer relativ hohen Windungszahl als Längsdrossel und dessen Sekundärseite mit einer relativ kleinen Windungszahl als Sensierungswicklung zur Erfassung einer Spannung verwendet wird.

In einer vorteilhaften Weiterbildung des erfindungsgemäßen Wechselrichters wird eine Schaltungsanordnung zur Filterung und Signalformung der an den Zusatzwicklungen abgenommen Signalspannungen vorgeschlagen. Die Schaltungsanordnung ermöglicht eine verbesserte Nulldurchgangserkennung an den von den Zusatzwicklungen erfassten Signalspannungen.

Im Folgenden soll die Erfindung anhand der Zeichnung dargestellt und näher erläutert werden. Die Figur 1 zeigt das Blockschaltbild eines erfindungsgemäß aufgebauten Wechselrichters. In der Figur 2 ist eine vorteilhafte Schaltungsanordnung zur Formung von Signalspannungen dargestellt. Die Figur 3 stellt schematisch einen Wechselrichteraufbau nach dem Stand der Technik dar und die Figur 4 zeigt dazu eine Ausführungsvariante mit zusätzlichen ausgangsseitigen Stromsensoren.

Zur Erläuterung der zur Erfindung führenden Problemstellung zeigt die Figur 3 schematisch ein durch ein Seriengerät der Anmelderin bekanntes Aufbauprinzip eines Wechselrichters 1', dessen elektrische Ausgangsleistung vorzugsweise zur Einspeisung in ein öffentliches Wechselspannungsnetz 6 vorgesehen ist. Mit dem Eingang des Wechselrichters 1' ist eine Gleichspannungsquelle 5 verbunden, welche beispielsweise der Solargenerator einer Photovoltaikanlage sein kann.

Die zum eigentlichen Wechselrichter 1' gehörenden Komponenten sind durch eine gestrichelte Umrandung zusammengefasst. Zu diesen Komponenten gehören eine Wechselrichterbrücke 2, ein der Wechselrichterbrücke 2 nachgeschaltetes Sinusfilter 3, sowie eine auf das Sinusfilter 3 folgende Drosselspulenanordnung 7. Dargestellt ist hier außerdem ein optional einzusetzendes EMV-Filter 4.

Der Aufbau einer Wechselrichterbrücke 2 wird hier als grundsätzlich bekannt vorausgesetzt und daher an dieser Stelle nicht im Detail beschrieben. Bei einem dreiphasigen System weist die Wechselrichterbrücke 2 etwa eine Anordnung aus drei Halbbrücken auf, die jeweils aus zwei Leistungshalbleiterschaltern bestehen, welche durch eine hier nur schematisch dargestellte elektronische Ansteuerschaltung 10' getaktet angesteuert werden.

Die relativ hohen Taktfrequenzen der hierbei verwendeten Ansteuerimpulse werden durch ein als Tiefpassfilter wirkendes Sinusfilter 3 auf den Phasenleitern L1, L2, L3 der Wechselrichterbrücke 2 weitgehend ausgefiltert. Das Sinusfilter 3 weist für jeden Phasenleiter L1, L2, L3 jeweils eine Längsdrossel 31 und einen gegen den Neutralleiter N geschalteten Kondensator 32 auf. Das Sinusfilter 3 formt die Impulse der Wechselrichterausgangsspannung zur gewünschten Sinusform.

Dem Sinusfilter 3 nachgeschaltet ist eine Drosselspulenanordnung 7, die für jeden Phasenleiter L1, L2, L3 sowie auch für den Neutralleiter N jeweils eine Drosselspule 71 aufweist. Jede Drosselspule 71 besteht aus einem eigenen Drosselspulenkern mit einer darauf aufgebrachten Drosselspulenwicklung. Die den Phasenleitern L1, L2, L3 zugeordneten Drosselspulen 71 der Drosselspulenanordnung 7 bilden dabei mit den Längsdrosseln 31 und Kondensatoren 32 des Sinusfilters 3 jeweils ein sogenanntes T-Filter 8' aus. Der Zweck des T-Filter 8' besteht darin, dem Wechselrichter 1' eine Mindestimpedanz und damit auch eine Eigenfrequenz vorzugeben, die außerhalb der Frequenzbereiche für mögliche störende Resonanzeffekte liegt.

Zwischen der Drosselspulenanordnung 7 und dem Ausgang des Wechselrichters 1' ist das EMV-Filter 4 angeordnet, das aus vier gleichsinnigen Drosselwicklungen 41 auf einem gemeinsamen Drosselkern 40 besteht, welche in die drei Phasenleiter L1, L2, L3 und in den Neutralleiter N eingeschaltet sind. Auf der Ausgangsseite der Drosselwicklungen 41 sind erste Kondensatoren 42 zwischen jeden Phasenleiter L1, L2, L3 und den Neutralleiter N, und zweite Kondensatoren 43 zwischen die Phasenleiter L1, L2, L3 und ein Massepotential M geschaltet. Das EMV-Filter 4 erfüllt die Funktion eines Netzfilters, welches elektrische Störimpulse zwischen der Wechselrichterbrücke 2 und dem Wechselspannungsnetz 6 in beiden Richtungen aussiebt.

Die Ansteuerschaltung 10' soll durch die Ansteuerung der Wechselrichterbrücke 2 unter anderem einen erwünschten Phasenwinkel zwischen Ausgangsstrom und Netzspannung erzeugen. Um eine solche Steuerung zu ermöglichen, sind Stromsensoren 91 innerhalb des T-Filters 8' vorgesehen, welche hinter den ersten Längsdrosseln 31 die zeitlichen Verläufe der Ströme iL1_wr, iL2_wr, iL3_wr in den drei Phasenleitern L1, L2, L3 erfassen.

Die Ansteuerschaltung 10' schätzt die Lage der Nulldurchgänge der Spannungen auf den Phasenleitern L1, L2, L3 anhand der leider nur ungenau bekannten Filterimpedanz ab. Für die Bauteile des T-Filters 8' sind dabei üblicherweise Toleranzen zwischen 10% und 20% anzunehmen. Erschwerend kommt hinzu, dass die Filterimpedanz eine temperaturabhängige Größe ist. Dementsprechend ist auch nur eine relative grobe Bestimmung der Spannungsnulldurchgänge möglich. Daraus folgend lässt sich mit dem in der Figur 3 dargestellten Aufbau nur eine relativ ungenaue cos-ϕ-Vorsteuerung realisieren.

Die Figur 4 zeigt den Aufbau eines Wechselrichters 1", mit dem statt einer relativ ungenauen Vorsteuerung des Phasenwinkels ϕ eine exakte cos ϕ-Regelung möglich wird. Hierbei ist zur Nulldurchgangsdetektion eine zusätzliche Messung der Ausgangsströme iL1_netz, iL2_netz, iL3_netz an den ausgangsseitigen Phasenleitern L1, L2, L3 des Wechselrichters 1", also direkt am Wechselspannungsnetz 6, vorgesehen, welche der Ansteuerschaltung 10" zur Auswertung zugeführt werden. Diese Lösung ist aber sehr kostenintensiv, da für jeden Phasenleiter L1, L2, L3 ein weiterer Stromsensor 92 benötigt wird und derartige Stromsensoren relativ kostenaufwendig sind.

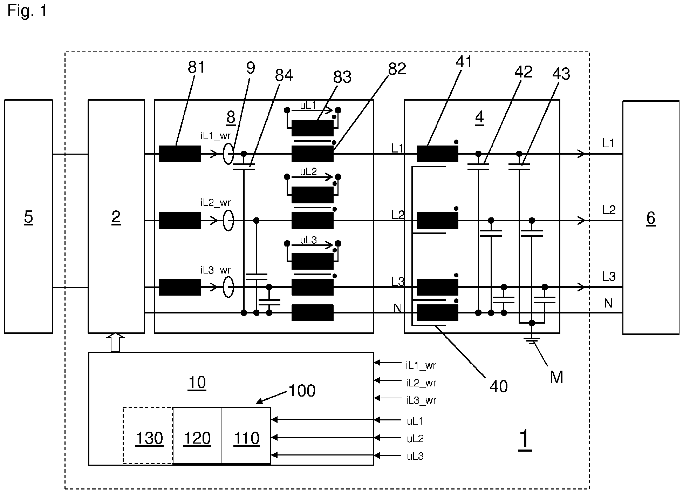

Der in der Figur 1 dargestellte erfindungsgemäße Wechselrichter 1 löst die vorstehend beschriebenen Probleme auf eine kostengünstige Weise. Die Lösung besteht darin, dass erfindungsgemäß an jeder netzseitigen Filterdrossel 82 des T-Filters 8 eine zusätzliche Wicklung 83 angeordnet ist. Durch diese zusätzlichen Wicklungen 83, die jeweils nur aus wenigen Drahtwindungen zu bestehen brauchen, können zu den Spannungen auf den Phasenleitern L1, L2, L3 proportionale Signalspannungen uL1, uL2, uL3 abgenommen werden, anhand derer die Spannungsnulldurchgänge der Phasenspannungen mit hoher Genauigkeit detektiert werden können. Relativ zu diesen Spannungsnulldurchgängen können unter Berücksichtigung der durch die Stromsensoren 9 erfassten Stromverläufe iL1_wr, iL2_wr, iL3_wr die Phasenwinkel zwischen Ausgangsströmen und Ausgangsspannungen der einzelnen Phasen bestimmt und geregelt werden.

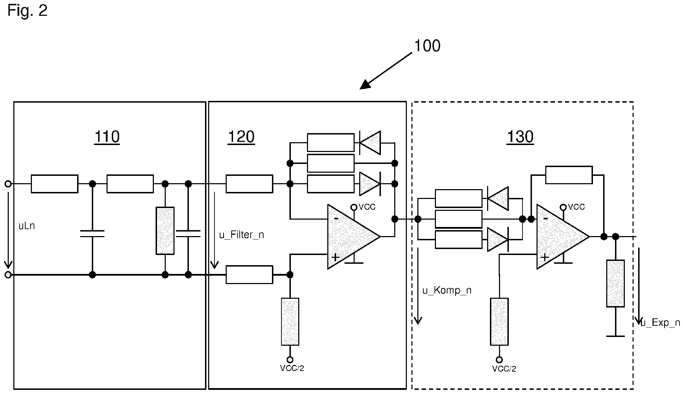

Zur genauen Bestimmung der Spannungsnulldurchgänge weist die Ansteuerschaltung 10 vorteilhafterweise für jeden Phasenleiter L1, L2, L3 eine Schaltungsanordnung 100 gemäß der Figur 2 auf. Die in der Figur 2 skizzenhaft dargestellte Schaltungsanordnung 100 besteht aus einem Tiefpassfilter 110, einer Kompressorschaltung 120 und optional aus einer der Kompressorschaltung 120 nachgeschalteten Expanderschaltung 130.

Diese Schaltungskomponenten 110, 120, 130 sind in der Figur 2 in Form von im Wesentlichen als bekannte Grundschaltungen skizziert und brauchen daher hier nicht im Detail erläutert zu werden. Erwähnenswert sind die antiparallelen Diodenanordnungen im Rückkoppelzweig der Kompressorschaltung 120 und im Eingangszweig der Expanderschaltung 130, welche die Funktion der Schaltung sowohl für positive und als auch für negative Eingangsspannungen ermöglicht.

Die in der Figur 2 schematisch dargestellte Schaltungsanordnung ist für jede Phase des Wechselrichters 1 jeweils einmal vorhanden. Der den Spannungssignalen zugefügte Index n steht im Folgenden stellvertretend für die Indizes 1, 2 und 3 der drei Phasenleiter L1, L2, L3.

Dem Eingang des Tiefpassfilters 110 wird die an einer der Zusatzwicklungen 83 abgenommene Spannung uLn zugeführt. Dieses Spannungssignal uLn enthält außer einer annähernd sinusförmigen netzfrequenten Grundschwingung noch eine Reihe von höherfrequenten Oberschwingungen, die aus den von der Ansteuerschaltung 10 stammenden höherfrequenten (Größenordnung 20 kHz) Ansteuerimpulsen der Wechselrichterbrücke 2 stammen. Diese höherfrequenten Anteile werden durch das Tiefpassfilter 110 weitgehend ausgefiltert, so dass die Ausgangsspannung u_Filter_n des Tiefpassfilters 110 eine im Wesentlichen sinusförmige Spannung mit einem nur noch geringen Störspannungsanteil darstellt.

Diese Ausgangsspannung u_Filter_n des Tiefpassfilters 110 wird der Kompressorschaltung 120 als Eingangsspannung zugeführt. Die Kompressorschaltung 120 bildet vom Aufbau her einen Logarithmierer, der die Eingangsspannung nichtlinear auf einen kleineren Wertebereich abbildet, der für eine Nulldurchgangserkennung, etwa durch einen nichtdargestellten Analog-Digital-Wandler gut auswertbar ist.

Für den Fall, dass die Nulldurchgänge zu steile Flanken aufweisen, kann zur Spreizung speziell dieser Signalbereiche dem Kompressor 120 optional eine Expanderschaltung 130 (Exponentierer) nachgeschaltet werden, durch die die Genauigkeit der Nullpunktsdurchgangserfassung weiter erhöht werden kann. Die Notwendigkeit der Expanderschaltung 130 ist nur gegeben, wenn die Steilheit im Nulldurchgang, bei maximalem Strom, begrenzt werden muss. Anderenfalls werden zur Signalaufbereitung lediglich das Tiefpassfilter 110 und die Kompressorschaltung120 benötigt.

Die Ansteuerschaltung 10 berechnet intern aus den erfassten Nullpunktsdurchgängen der Spannungen u_Komp_n beziehungsweise u_Exp_n und den von den Stromsensoren 9 erfassten Stromverläufe iLn_wr jeweils die Phasenverschiebung zwischen Ausgangsstrom und Ausgangsspannung und beeinflusst entsprechend die Ansteuerung der Wechselrichterbrücke 2 zur Einstellung der erforderlichen Blindleistungseinspeisung.

### Bezugszeichen

- 1, 1', 1": Wechselrichter
- 2: Wechselrichterbrücke
- 3: Sinusfilter
- 31: Längsdrossel
- 32: Kondensator
- 4: EMV-Filter
- 40: Drosselkern
- 41: Drosselwicklungen
- 42: erste Kondensatoren
- 43: zweite Kondensatoren
- 5: Gleichspannungsquelle
- 6: Wechselspannungsnetz
- 7: Drosselspulenanordnung
- 71: Drosselspulen (Längsdrossel)
- 8, 8': T-Filter
- 81: erste Längsdrossel
- 82: zweite Längsdrossel
- 83: Zusatzwicklung
- 84: Kondensator
- 9: Stromsensoren
- 91: (erste) Stromsensoren
- 92: (zweite) Stromsensoren
- 10, 10', 10": Ansteuerschaltung
- 100: Schaltungsanordnung
- 110: Tiefpassfilter
- 120: Kompressorschaltung
- 130: Expanderschaltung
- L1, L2, L3: Phasenleiter
- L1, L2, L3, N: Ausgangsleitungen
- M: Massepotential
- N: Neutralleiter
- iLn_wr, iLn_netz: Ströme (Stromverläufe) (n = 1, 2, 3)
- uLn: Signalspannungen (n = 1, 2, 3)
- uLn, u_Filter_n, u_Komp_n, u_Exp_n: Spannungssignale (n = 1, 2, 3)

## Patentansprüche

1. Wechselrichter (1, 1', 1")
mit einer Wechselrichterbrücke (2), die eine ein- oder mehrphasige Wechselspannung erzeugt, welche über einen oder mehrere Phasenleiter (L1, L2, L3) und einen Neutralleiter (N) mit einem Wechselspannungsnetz (6) verbindbar ist, und
mit einem der Wechselrichterbrücke (2) nachgeschalteten T-Filter (8, 8'), bestehend für jeden Phasenleiter (L1, L2, L3) aus jeweils zwei hintereinandergeschalteten Längsdrosseln (31,71; 81, 82), an deren Verbindungspunkt jeweils ein Anschluss eines Kondensators (32, 84) anliegt, dessen zweiter Anschluss gegen den Neutralleiter (N) geschaltet ist,
**dadurch gekennzeichnet,**
**dass** die netzseitigen Längsdrosseln (82) des T-Filters (8) jeweils eine Zusatzwicklung (83) aufweisen, an denen durch eine Ansteuerschaltung (10) jeweils eine Signalspannung (uL1, uL2, uL3) zur Beeinflussung der Wechselrichterbrücke (2) erfasst wird.

2. Wechselrichter nach Anspruch 1, **dadurch gekennzeichnet, dass** die Signalspannungen (uL1, uL2, uL3) jeweils durch eine Schaltungsanordnung (100) aufbereitet werden, die mindestens ein Tiefpassfilter (110) und eine Kompressorschaltung (120) aufweist.

3. Wechselrichter nach Anspruch 2, **dadurch gekennzeichnet, dass** der Kompressorschaltung (120) eine Expanderschaltung (130) nachgeschaltet ist.

4. Wechselrichter nach Anspruch 2 oder 3, **dadurch gekennzeichnet, dass** die Schaltungsanordnung (100) Bestandteil einer Ansteuerschaltung (10) zur Steuerung der Wechselrichterbrücke (2) ist.

5. Wechselrichter nach Anspruch 1, **dadurch gekennzeichnet, dass** der Wechselrichter (1) Bestandteil einer Photovoltaikanlage ist.

## Claims

1. Inverter (1, 1', 1")
having an inverter bridge (2) that generates a single- or multiphase alternating voltage which can be connected to an alternating voltage grid (6) via one or more phase conductors (L1, L2, L3) and a neutral conductor (N), and
having a T-filter (8, 8') downstream from the inverter bridge (2) comprising, for each phase conductor (L1, L2, L3), two cascaded direct-axis inductors (31, 71; 81, 82) at the junction of each of which a terminal abuts for a capacitor (32, 84) whose second terminal is connected to the neutral conductor (N),
**characterised in that**
each of the direct-axis inductors (82) of the T filter (8) on the network side has an auxiliary winding (83) at each of which a signal voltage (uL1, uL2, uL3) for influencing the inverter bridge (2) is detected by a triggering circuit (10).

2. Inverter according to Claim 1, **characterised in that** each of the signal voltages (uL1, uL2, uL3) is conditioned by a circuit configuration (100) having at least one low-pass filter (110) and a compressor circuit (120).

3. Inverter according to Claim 2, **characterised in that** an expander circuit (130) is connected downstream of the compressor circuit (120).

4. Inverter according to Claim 2 or Claim 3, **characterised in that** the circuit configuration (100) is an element of a triggering circuit (10) for controlling the inverter bridge (2).

5. Inverter according to Claim 1, **characterised in that** the inverter (1) is an integral part of a photovoltaic system.

## Revendications

1. Onduleur (1, 1', 1"),
avec un pont d'onduleur (2), qui, générant une tension alternative monophasée ou polyphasée, peut être relié, par l'intermédiaire d'un ou de plusieurs conducteur/s de phase (L1, L2, L3) et d'un conducteur neutre (N), à un réseau de tension alternative (6) et
avec un filtre en T (8, 8'), qui, connecté en aval du pont d'onduleur (2), consiste en deux inductances longitudinales, (31, 71 ; 81, 82), connectées en cascade pour chacun des conducteur/s de phase (L1, L2, L3), au point de jonction desquelles est respectivement appliqué un raccord d'un condensateur (32, 84), dont le deuxième raccord est connecté contre le conducteur neutre (N),
**caractérisé en ce que**
les inductances longitudinales (82) du filtre en T (8) côté réseau, présentent chacune un enroulement supplémentaire (83), sur lesquels, par un circuit d'excitation (10), une tension de signal (uL1, uL2, uL3) est respectivement saisie pour influencer le pont d'onduleur (2).

2. Onduleur selon la revendication 1, **caractérisé en ce que** les tensions de signal (uL1, uL2, uL3) sont traitées chacune par un circuit de commutation (100), qui présente au moins un filtre passe-bas (110) et un circuit de compresseur (120).

3. Onduleur selon la revendication 2, **caractérisé en ce que**, en aval du circuit de compresseur (120), est connecté un circuit d'expanseur (130).

4. Onduleur selon revendication 2 ou 3, **caractérisé en ce que** le circuit de commutation (100) est composant d'un circuit de commande (10) pour la commande du pont d'onduleur (2).

5. Onduleur selon la revendication 1, **caractérisé en ce que** l'onduleur (1) est composant d'une installation photovoltaïque.
